# EUROPEAN PATENT APPLICATION

(11) **EP 4 823 065 A1**
(43) Date of publication of application: **14.10.2026**
(21) Application number: 25738968.4
(22) Date of filing: 08.01.2025
(51) Int. Cl.: H04L 65/1069, H04L 65/1104, H04L 65/1063, H04L 65/1016

(54) **METHOD AND APPARATUS FOR CONTROLLING SESSION IN CONSIDERATION OF INDEPENDENT IMS DC SERVICE CHARACTERISTICS**

(30) Priority: 12.01.2024 KR 20240005360
(71) Applicant: Samsung Electronics Co., Ltd., Suwon-si, Gyeonggi-do 16677 (KR)
(72) Inventor: BAE, Jaehyeon, Suwon-si, Gyeonggi-do 16677 (KR); KIM, Dongyeon, Suwon-si, Gyeonggi-do 16677 (KR); LEE, Hoyeon, Suwon-si, Gyeonggi-do 16677 (KR)
(74) Representative: HGF
(86) International application number: PCT/KR2025/000446
(87) International publication number: WO 2025/150895

(57) **Abstract**

The present disclosure relates to a 5G or 6G communication system for supporting higher data transfer rates. According to an embodiment of the present disclosure, a method performed by a second terminal in a wireless communication system comprises the steps of: obtaining a session description protocol (SDP) offer for a bootstrap data channel related to a first terminal and an SDP offer for an application data channel, wherein the SDP offer includes application binding information related to a data channel application; identifying, on the basis of the application binding information, whether the data channel application is available in the second terminal; if the data channel application is not available in the second terminal, establishing a connection of a bootstrap data channel session between the second terminal and a media function (MF); and downloading the data channel application on the basis of the connection of the bootstrap data channel session.

## Description

### [Technical Field]

The present disclosure relates to operations of a terminal and an IMS AS entity in a wireless communication system. More particularly, the present disclosure relates to a method and an apparatus for controlling a bootstrap data channel session or an application data channel session of which connection is requested by the terminal through a data channel server to support an independent IMS DC service.

### [Background Art]

5G mobile communication technologies define broad frequency bands such that high transmission rates and new services are possible, and can be implemented not only in "Sub 6GHz" bands such as 3.5GHz, but also in "Above 6GHz" bands referred to as mmWave including 28GHz and 39GHz. In addition, it has been considered to implement 6G mobile communication technologies (referred to as Beyond 5G systems) in terahertz bands (for example, 95GHz to 3THz bands) in order to accomplish transmission rates fifty times faster than 5G mobile communication technologies and ultra-low latencies one-tenth of 5G mobile communication technologies.

At the beginning of the development of 5G mobile communication technologies, in order to support services and to satisfy performance requirements in connection with enhanced Mobile BroadBand (eMBB), Ultra Reliable Low Latency Communications (URLLC), and massive Machine-Type Communications (mMTC), there has been ongoing standardization regarding beamforming and massive MIMO for mitigating radio-wave path loss and increasing radio-wave transmission distances in mmWave, supporting numerologies (for example, operating multiple subcarrier spacings) for efficiently utilizing mmWave resources and dynamic operation of slot formats, initial access technologies for supporting multi-beam transmission and broadbands, definition and operation of BWP (BandWidth Part), new channel coding methods such as a LDPC (Low Density Parity Check) code for large amount of data transmission and a polar code for highly reliable transmission of control information, L2 pre-processing, and network slicing for providing a dedicated network specialized to a specific service.

Currently, there are ongoing discussions regarding improvement and performance enhancement of initial 5G mobile communication technologies in view of services to be supported by 5G mobile communication technologies, and there has been physical layer standardization regarding technologies such as V2X (Vehicle-to-everything) for aiding driving determination by autonomous vehicles based on information regarding positions and states of vehicles transmitted by the vehicles and for enhancing user convenience, NR-U (New Radio Unlicensed) aimed at system operations conforming to various regulation-related requirements in unlicensed bands, NR UE Power Saving, Non-Terrestrial Network (NTN) which is UE-satellite direct communication for providing coverage in an area in which communication with terrestrial networks is unavailable, and positioning.

Moreover, there has been ongoing standardization in air interface architecture/protocol regarding technologies such as Industrial Internet of Things (IIoT) for supporting new services through interworking and convergence with other industries, IAB (Integrated Access and Backhaul) for providing a node for network service area expansion by supporting a wireless backhaul link and an access link in an integrated manner, mobility enhancement including conditional handover and DAPS (Dual Active Protocol Stack) handover, and two-step random access for simplifying random access procedures (2-step RACH for NR). There also has been ongoing standardization in system architecture/service regarding a 5G baseline architecture (for example, service based architecture or service based interface) for combining Network Functions Virtualization (NFV) and Software-Defined Networking (SDN) technologies, and Mobile Edge Computing (MEC) for receiving services based on UE positions.

As 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with eXtended Reality (XR) for efficiently supporting AR (Augmented Reality), VR (Virtual Reality), MR (Mixed Reality) and the like, 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for providing coverage in terahertz bands of 6G mobile communication technologies, multi-antenna transmission technologies such as Full Dimensional MIMO (FD-MIMO), array antennas and large-scale antennas, metamaterial-based lenses and antennas for improving coverage of terahertz band signals, high-dimensional space multiplexing technology using OAM (Orbital Angular Momentum), and RIS (Reconfigurable Intelligent Surface), but also full-duplex technology for increasing frequency efficiency of 6G mobile communication technologies and improving system networks, AI-based communication technology for implementing system optimization by utilizing satellites and AI (Artificial Intelligence) from the design stage and internalizing end-to-end AI support functions, and next-generation distributed computing technology for implementing services at levels of complexity exceeding the limit of UE operation capability by utilizing ultra-high-performance communication and computing resources.

### [Disclosure]

### [Technical Problem]

The present disclosure provides an information management method and apparatus for supporting a bootstrap or application data channel connection operation for a standalone IMS data channel service connection through various embodiments. Further, the present disclosure provides an information management method and apparatus for supporting an application data channel session connection using a native application by a UE.

### [Technical Solution]

According to an embodiment of the present disclosure, a method of an IMS application server (AS) on a terminating side includes receiving a data channel session connection request message including a data channel-related session description protocol (SDP) offer information which does not include separate audio, video, or messaging-related session description protocol information transmitted from a network on an originating side through a serving-call session control function (S-CSCF), and when transmission of the data channel-related session description protocol information is needed in addition to the audio, video, or messaging-related session description protocol information, based on capability information of a UE or the network configured during registration of the UE in the network on the terminating side or when the UE is a UE supporting only the audio, video, or messaging-related session description protocol information, adding the audio, video, or messaging-related session description protocol information to update a session connection request message, transmitting an application data channel session connection request message updated in consideration of the capability information of the network and the UE to the UE, and receiving and transmitting response information of the application data channel session connection request transmitted by the UE.

According to an embodiment of the present disclosure, a method performed by a second terminal in a wireless communication system comprises acquiring a session description protocol (SDP) offer for a bootstrap data channel related to a first terminal and an SDP offer for an application data channel, the SDP offers comprising application binding information related to a data channel application, identifying whether the data channel application is available within the second terminal, based on the application binding information, when the data channel application is not available within the second terminal, establishing a connection of a bootstrap data channel session between the second terminal and a media function (MF), and downloading the data channel application, based on the connection of the bootstrap data channel session.

According to an embodiment of the present disclosure, a method performed by a first terminal in a wireless communication system comprises transmitting a session description protocol (SDP) offer for a bootstrap data channel related to the first terminal and an SDP offer for an application data channel to an internet protocol (IP) multimedia service (IMS) application server (AS), the SDP offers comprising application binding information related to a data channel application, and receiving a 200 OK response message from a second terminal, wherein the application binding information is used to identify whether the data channel application is available within the second terminal by the second terminal. According to an embodiment of the present disclosure, a second terminal in a wireless communication system comprises a transceiver and a processor, and the processor is configured to acquire a session description protocol (SDP) offer for a bootstrap data channel related to a first terminal and an SDP offer for an application data channel, the SDP offers comprising application binding information related to a data channel application, identify whether the data channel application is available within the second terminal, based on the application binding information, when the data channel application is not available within the second terminal, establish a connection of the bootstrap data channel session between the second terminal and a media function (MF), and download the data channel application, based on the connection of the bootstrap data channel session. According to an embodiment of the present disclosure, a first terminal in a wireless communication system comprises a transceiver and a processor, wherein the processor is configured to transmit a session description protocol (SDP) offer for a bootstrap data channel related to the first terminal and an SDP offer for an application data channel to an internet protocol (IP) multimedia service (IMS) application server (AS), the SDP offers comprising application binding information related to a data channel application, and receive a 200 OK response message from a second terminal, and wherein the application binding information is used to identify whether the data channel application is available within the second terminal by the second terminal.

### [Advantageous Effects]

A method and an apparatus according to an embodiment of the present disclosure may perform an independent IMS data channel (standalone IMS data channel) connection process by the UE without a connection of the existing IMS session (video/audio/messaging). It is possible to provide a method and an operation for the IMS data channel connection according to UE capability in the IMS AS during a process of making the independent IMS data channel connection. When the UE performs an application data channel connection operation without any bootstrap data channel connection process during the process of making the independent IMS data channel connection, it is possible to provide a method and an operation for the IMS data channel connection according to data channel application-related information within an application data channel connection request message.

The effects that can be obtained by the present disclosure are not limited to the above-described effects, and other effects that have not been mentioned may be clearly understood by those skilled in the art to which the present disclosure belongs from the following description.

### [Description of Drawings]

The above and other purposes, features, and advantages of the present disclosure will become more apparent through the following description of embodiments of the present disclosure with reference to the accompanying drawings.
FIG. 1 is a diagram illustrating a network structure and an interface of a 5G system according to an embodiment of the present disclosure.
FIG. 2 is an example of an internet protocol (IP) multimedia subsystem data channel (IMS-DC) structure that provides a data channel service based on an internet protocol (IP) multimedia subsystem (IMS) service according to an embodiment of the present disclosure.
FIG. 3 illustrates an example of a UE and network operation structure depending on an independent IMS data channel service connection request according to an embodiment of the present disclosure.
FIG. 4 illustrates an example of a structure for performing a standalone application data channel session connection operation without a separate bootstrap data channel session connection according to an embodiment of the present disclosure.
FIG. 5 is a flowchart illustrating an operation related to selection and registration of an IMS AS that supports a service of the UE, based on UE capability information or the like during an IMS registration procedure of the UE, according to an embodiment of the present disclosure.
FIG. 6A is a flowchart illustrating an operation process in which, based on a session connection request message including a session description protocol including only data channel-related information, the existing UE and network process the corresponding session connection request message according to an embodiment of the present disclosure.
FIG. 6B is a flowchart illustrating an operation process in which, based on a session connection request message including a session description protocol including only data channel-related information, the existing UE and network process the corresponding session connection request message according to an embodiment of the present disclosure.
FIG. 7A is a flowchart illustrating an operation for performing an application data channel-only session connection request without a separate bootstrap data channel connection according to an embodiment of the present disclosure.
FIG. 7B is a flowchart illustrating an operation for performing an application data channel-only session connection request without a separate bootstrap data channel connection according to an embodiment of the present disclosure.
FIG. 8A is a flowchart illustrating an operation of the UE on the terminating side for performing an application data channel-only session connection request without a separate bootstrap data channel connection according to an embodiment of the present disclosure.
FIG. 8B is a flowchart illustrating an operation of the UE on the terminating side for performing an application data channel-only session connection request without a separate bootstrap data channel connection according to an embodiment of the present disclosure.
FIG. 8C is a flowchart illustrating an operation of the UE on the terminating side for performing an application data channel-only session connection request without a separate bootstrap data channel connection according to an embodiment of the present disclosure.
FIG. 9 is a flowchart illustrating an operation based on the case where a required data channel application and related information may be supported in connection with a process of performing an application data channel-only session connection request without a separate bootstrap data channel connection according to an embodiment of the present disclosure.
FIG. 10 is a flowchart illustrating an operation based on the case where a required data channel application and related information may not be supported in connection with a process of performing an application data channel-only session connection request without a separate bootstrap data channel connection according to an embodiment of the present disclosure.
FIG. 11 is a block diagram illustrating a structure of the terminal according to an embodiment of the present disclosure.
FIG. 12 is a block diagram illustrating a structure of an IMS AS entity according to an embodiment of the present disclosure.

### [Mode for Disclosure]

Hereinafter, embodiments of the disclosure will be described in detail with reference to the accompanying drawings.

In describing the disclosure, descriptions related to technical contents well-known in the art and not associated directly with the disclosure will be omitted. Such an omission of unnecessary descriptions is intended to prevent obscuring of the main idea of the disclosure and more clearly transfer the main idea. The terms which will be described below are terms defined in consideration of the functions in the disclosure, and may be different according to intentions of users or operators, or customs. Therefore, the definitions of the terms should be made based on the contents throughout the specification. For the same reason, in the accompanying drawings, some elements may be exaggerated, omitted, or schematically illustrated. Further, the size of each element does not completely reflect the actual size. In the drawings, identical or corresponding elements are provided with identical reference numerals.

Hereinafter, a base station (BS) is an entity that performs resource allocation for a terminal, and may be at least one of a gNode B, an eNode B, a Node B (or an xNode B, where x is an alphabet including g and e), a wireless access unit, a base station controller, a satellite, an airborne vehicle, or a node on a network. A user equipment (UE) may include a mobile station (MS), a vehicle, a satellite, an airborne vehicle, a cellular phone, a smartphone, a computer, or a multimedia system capable of performing communication functions. In the disclosure, a downlink (DL) refers to a radio transmission path through which a base station transmits a signal to a terminal, and an uplink (UL) refers to a radio transmission path through which a terminal transmits a signal to a base station. Additionally, there may exist a sidelink (SL) which refers to a radio transmission path through which a terminal transmits a signal to another terminal.

In addition, although LTE, LTE-A, or 5G systems may be described by way of example below, the embodiments of the present disclosure may also be applied to other communication systems having a similar technical background or channel type. For example, 5G-Advanced, NR-Advanced, or 6th generation (6G) mobile communication technologies developed after 5G mobile communication technology (or new radio, NR) may be included therein, and the term 5G hereinafter may be a concept including the existing LTE, LTE-A, and other similar services. Furthermore, based on determinations by those skilled in the art, the present disclosure may also be applied to other communication systems through some modifications without significantly departing from the scope of the present disclosure.

Herein, it will be understood that each block of the processing flowchart illustrations, and combinations of blocks in the flowchart illustrations, may be performed by computer program instructions. These computer program instructions may be loaded onto a processor of a general purpose computer, special purpose computer, or other programmable data processing equipment to produce a machine, such that the instructions executed through the processor of the computer or other programmable data processing equipment create means for performing the functions specified in the flowchart block(s). These computer program instructions may also be stored in a computer-usable or computer-readable memory that may direct a computer or other programmable data processing equipment to function in a particular manner, such that the instructions stored in the computer-usable or computer-readable memory produce an article of manufacture including instruction means that perform the function specified in the flowchart block(s). The computer program instructions may also be loaded onto a computer or other programmable data processing equipment to cause a series of operational steps to be performed on the computer or other programmable data processing equipment to produce a computer-executed process such that the instructions executed on the computer or other programmable data processing equipment provide steps for executing the functions specified in the flowchart block(s). Further, each block may represent a module, segment, or portion of code, which includes one or more executable instructions for executing the specified logical function(s). It should also be noted that in some alternative implementations, the functions noted in the blocks may occur out of the order. For example, two blocks shown in succession may in fact be performed substantially concurrently or the blocks may sometimes be performed in the reverse order, depending upon the functionality involved.

As used in the present embodiment, the term "~unit" may refer to a software element or a hardware element, such as a field programmable gate array (FPGA) or an application specific integrated circuit (ASIC), and the "~unit" performs certain roles. However, the term "~unit" is not limited to software or hardware. The "~unit" may be configured to be stored in an addressable storage medium or configured to execute one or more processors. Therefore, as an example, the "~unit" includes software elements, object-oriented software elements, class elements, and task elements, processes, functions, attributes, procedures, subroutines, segments of program code, drivers, firmware, microcode, circuits, data, databases, data structures, tables, arrays, and variables. The components and functions provided within the components and "~units" may be combined into a smaller number of components and "~units," or further divided into additional components and "~units." Moreover, the components and "~units" may be implemented to reproduce one or more CPUs within a device or a secure multimedia card. Further, in an embodiment, the "~unit" may include one or more processors.

The 3GPP, which is in charge of cellular mobile communication standards, is moving forward with standardization by naming a new core network structure as 5G Core (5GC) in order to seek evolution from the 4G LTE system to the 5G system. The 5GC supports the following differentiated functions compared to the Evolved Packet Core (EPC), which is a network core for 4G.

In the 5GC, a network slice function is introduced. As a requirement of 5G, the 5GC must support various types of terminal types and services; e.g., enhanced Mobile Broadband (eMBB), Ultra Reliable Low Latency Communications (URLLC), and massive Machine Type Communications (mMTC). Each of these terminals/services has different requirements demanded of the core network. For example, the eMBB service may require a high data rate, and the URLLC service may require high reliability and low latency. In order to satisfy these various service requirements, a network slice technology has been proposed.

Network slicing may refer to a method of creating a plurality of logical networks (e.g., network slices) by virtualizing one physical network. An activated network slice may be referred to as a network slice instance, and each network slice instance (NSI) may have different characteristics. A mobile communication operator can satisfy various service requirements according to terminals/services by configuring a network function (NF) appropriate for the characteristics of each NSI. For example, the mobile communication operator can efficiently support various 5G services (e.g., eMBB, URLLC, or mMTC) by allocating an NSI appropriate for the characteristics of the service required by each terminal.

The 5GC can facilitate support for the network virtualization paradigm through the separation of a mobility management function and a session management function. In 4G LTE, all terminals can receive services from a network through signaling exchange with a single core entity called a Mobility Management Entity (MME), which is in charge of registration, authentication, mobility management, and session management functions. In 5G, as the number of terminals (including MTC terminals) explodes and the mobility and traffic/session characteristics to be supported are segmented according to the types of terminals, if a single entity (e.g., MME) supports all functions, scalability for adding entities for each required function inevitably decreases. Therefore, in order to improve scalability in terms of functional/implementation complexity and signaling load of the core entity in charge of the control plane, various functions are being developed based on a structure that separates the mobility management function and the session management function.

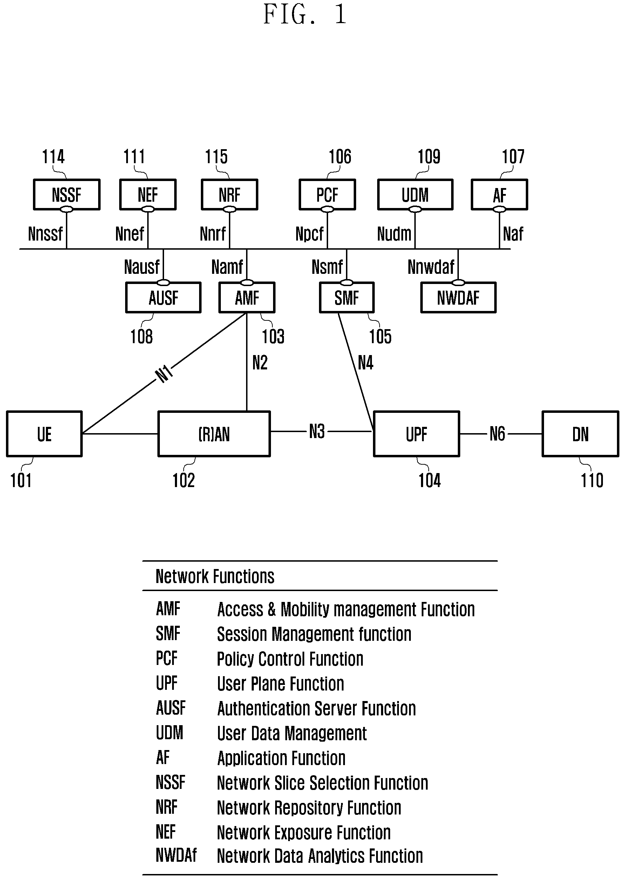

FIG. 1 is a diagram illustrating a network structure and an interface of a 5G system according to an embodiment of the present disclosure.

Network entities included in the network structure of the 5G system in FIG. 1 may include network functions (NFs) according to system implementation.

Referring to FIG. 1, the network structure of the 5G system may include various network entities. For example, the 5G system may include an authentication server function (AUSF) entity 108, a (core) access and mobility management function (AMF) entity 103, a session management function (SMF) entity 105, a policy control function (PCF) entity 106, an application function (AF) entity 107, a unified data management (UDM) entity 109, a data network (DN) 110, a network exposure function (NEF) entity 111, a network slicing selection function (NSSF) entity 114, a network repository function (NRF) entity 115, a network data analytics function (NWDAF), an edge application service domain repository (EDR), an edge application server (EAS), an EAS discovery function (EASDF), a user plane function (UPF) entity 104, a (radio) access network ((R)AN) 102, and a terminal, that is, a user equipment (UE) 101.

The respective NF entities of the 5G system 100 support the following functions.

The AUSF 108 processes and stores data for authenticating the UE 101.

The AMF 103 may provide a function for access in units of UEs and mobility management and may be connected to one AMF basically per UE. Specifically, the AMF 103 supports functions such as signaling between CN nodes for mobility between 3GPP access networks, termination of a radio access network (RAN) CP interface (that is, an N2 interface), termination of non-access stratum (NAS) signaling (N1), NAS signaling security (NAS ciphering and integrity protection), AS security control, registration management (registration area management), connection management, idle mode UE reachability (including control and performance of paging re-transmission), mobility management control (subscription and policy), supporting of intra-system mobility and inter-system mobility, supporting of network slicing, SMF selection, lawful intercept (for an AMF event and an interface to an LI system), provision of transmission of a session management (SM) message between the UE and the SMF, a transparent proxy for SM message routing, access authentication, access authorization including roaming authority check, provision of transmission of an SMS message between the UE and an SMSF, a security anchor function (SAF), and/or security context management (SCM). Some or all of the functions of the AMF entity 103 may be supported within a single instance of one AMF entity.

The DN 110 is, for example, operator service, Internet access, 3^{rd}-party service, or the like. The DN 110 transmits a downlink protocol data unit (PDU) to the UPF entity 104 or receives the PDU transmitted from the UE 101 from the UPF entity 104.

The PCF entity 106 provides functions of receiving information on packet flow from an application server and determining a policy of mobility management, session management, or the like. Specifically, the PCF entity 106 supports functions of supporting a unified policy framework for controlling network operation, providing a policy rule to allow control plane function entity(s) (for example, the AMF entity, the SMF entity, and the like) to enforce the policy rule, and implementing a front end for accessing relevant subscription information to determine a policy within a user data repository (UDR).

The SMF entity 105 may provide a session management function, and respective sessions may be managed by different SMF entities when the UE 101 has a plurality of sessions. Specifically, the SMF entity 105 supports functions of session management (for example, session establishment, modification, and release including maintenance of a tunnel between the UPF entity 104 and the (R)AN node 102), allocation and management of a UE IP address (selectively including authentication), selection and control of a UP function, traffic steering configuration for routing traffic from the UPF entity 104 to a proper destination, termination of an interface for policy control functions, enforcement of a policy and a control part of quality of service (QoS), lawful intercept (for an SM event and an interface for an LI system), termination of a session management (SM) part of a NAS message, downlink data notification, transmission of access network (AN)-specific SM information to the (R)AN 102 through N2 via an initiator (the AMF entity 103) , determination of a session and service continuity (SSC) mode of a session, roaming, and the like. Some or all of the functions of the SMF entity 105 may be supported within a single instance of one SMF entity.

The UDM entity 109 stores user subscription data, policy data, and the like. The UDM entity 109 includes two parts, that is, an application front end (FE) and a user data repository (UDR).

The front end (FE) includes a UDM FE in charge of managing a location, managing subscription, processing credential, or the like, and a PCF entity in charge of controlling a policy. The UDR stores data required for functions provided by the UDM-FE and a policy profile required by the PCF entity. Data stored in the UDR includes the user subscription data including a subscription identifier, security credential, access- and mobility-related subscription data, and session-related subscription data, and the policy data. The UDM-FE accesses subscription information stored in the UDR and supports functions of authentication credential processing, user identification handling, access authentication, access authentication, registration/mobility management, subscription management, SMS management, and the like.

The UPF entity 104 transfers a downlink PDU received from the DN 110 to the UE 101 via the (R)AN 102 and transfers an uplink PDU received from the UE 101 to the DN 110 via the (R)AN 102. Specifically, the UPF entity 104 supports functions of an anchor point for intra/inter RAT mobility, an external PDU session point of interconnect to a data network, packet routing and forwarding, a user plane part of packet inspection and policy rule enforcement, lawful intercept, report on an amount of traffic usage, an uplink classifier for supporting routing of traffic flow to a data network, a branching point for supporting a multi-homed PDU session, QoS handling for a user plane (for example, performing packet filtering, gating, or uplink/downlink rate), uplink traffic verification (service data flow (SDF) mapping between the SDF and the QoS flow), transport level packet marking within uplink and downlink, downlink packet buffering, downlink data notification triggering, and the like. Some or all of the functions of the UPF entity 104 may be supported within a single instance of one UPF.

The AF entity 107 mutually operates with a 3GPP core network to provide service (for example, supports functions of influencing an application on traffic routing, accessing network capability exposure, interacting with a policy framework for policy control, or the like).

The (R)AN 102 collectively refers to a new radio access network that supports all of an evolved UTRA (E-UTRA), which is an evolved version of the 4G radio access technology, and a new radio (NR) access technology (for example, gNB).

The gNB supports functions for radio resource management (that is, radio bearer control, radio admission control, connection mobility control, dynamic allocation of resources to the UE in uplink/downlink (that is, scheduling)), internet protocol (IP) header compression, encryption of user data stream and integrity protection, selection of the AMF in UE attachment when routing to the AMF is not determined based on information provided to the UE, user plane data routing to UPF(s), control plane information routing to the AMF, connection setup and release, scheduling and transmission of a paging message (generated from the AMF), scheduling and transmission of system broadcast information (generated from the AMF or operating and maintenance (O&M)), measurement for mobility and scheduling and measurement reporting configuration, transport level packet marking in uplink, session management, supporting of network slicing, QoS flow management and mapping to a data radio bearer, supporting of the UE in an inactive mode, a NAS message distribution function, a NAS node selection function, radio access network sharing, dual connectivity, tight interworking between NR and E-UTRA, and the like.

The user equipment (UE) 101 is a user device. The user device may be referred to as the term such as a terminal, a mobile equipment (ME), or a mobile station (MS). Further, the user device may be a portable device such as a notebook, a mobile phone, a personal digital assistant (PDA), a smartphone, or a multimedia device, or may be a device, which cannot be portable such as a personal computer (PC) or a vehicle-mounted device.

The NEF 111 provides, for example, a 3^{rd} party, internal exposure/re-exposure, an application function, and a means for safely exposing services and capabilities for edge computing, provided by 3GPP network functions. The NEF 111 receives information (based on exposed capability(s) of other NF(s)) from the other NF(s). The NEF 111 may store information received as the structured data by using a standardized interface to the data storage network function. The stored information may be re-exposed to other NF entity(s) and AF entity(s) by the NEF entity 111 and may be used for another purpose such as analysis.

The EASDF is an NF capable of adding extension mechanisms for DNS (EDNS) client subnet (ECS) option that can be expressed as an address of a DNS server to which a domain name system (DNS) request from the UE is forwarded or an IP subnet address which should be added when the DNS request from the UE is forwarded. The EASDF receives exchange active sync (EAS) domain configuration information from the EDR and processes a DNS request message received from the UE according to the received information. Further, the EASDF is an NF that performs a function of receiving a UE IP address, location information of the UE in the 3GPP, a DNS message processing rule, and a DNS message reporting rule from the SMF 105, processing a DNS query message received from the UE or a DNS response message received from a DNS server, and transmitting information within the DNS message and statistical information obtained by processing the same to the SMF 105 according to the DNS message reporting rule.

The NRF 115 supports a service discovery function. The NRF receives an NF discovery request from an NF instance and provides information on the discovered NF instance to the NF instance. Further, the NRF maintains available NF instances and services supported thereby.

Meanwhile, FIG. 1 illustrates a reference model in the case where the UE 101 accesses one DN 110 by using one PDU session for convenience of description, but the present disclosure is not limited thereto.

The UE 101 may simultaneously access two (that is, local and central) data networks by using multiple PDU sessions. At this time, two SMFs may be selected for different PDU sessions. However, each SMF may have a capability of controlling both the local UPF and the central UPF within the PDU session.

Further, the UE 101 may simultaneously access two (that is, local and central) data networks provided within a single PDU session.

In the 3GPP system, a conceptual link connecting NFs within the 5G system is defined as a reference point. For example, reference point(s) included in the 5G system 100 of FIG. 1 are described below.
- N1: a reference point between the UE 101 and the AMF 103
- N2: a reference point between the (R)AN 102 and the AMF 103
- N3: a reference point between the (R)AN 102 and the UPF 104
- N4: a reference point between the SMF 105 and the UPF 104
- N5: a reference point between the PCF 106 and the AF 107
- N6: a reference point between the UPF 104 and the DN 110
- N7: a reference point between the SMF 105 and the PCF 106
- N8: a reference point between the UDM 109 and the AMF 103
- N10: a reference point between the UDM 109 and the SMF 105
- N11: a reference point between the AMF 103 and the SMF 105
- N12: a reference point between the AMF 103 and the AUSF 108
- N13: a reference point between the UDM 109 and the AUSF 108
- N14: a reference point between two AMFs 103
- N15: a reference point between the PCF and the AMF in non-roaming scenario and a reference point between the PCF and the AMF within a visited network in roaming scenario
- Nx: a reference point between the SMF 105 and the EASDF
- Ny: a reference point between the NEF (EDF) 111 and the EASDF

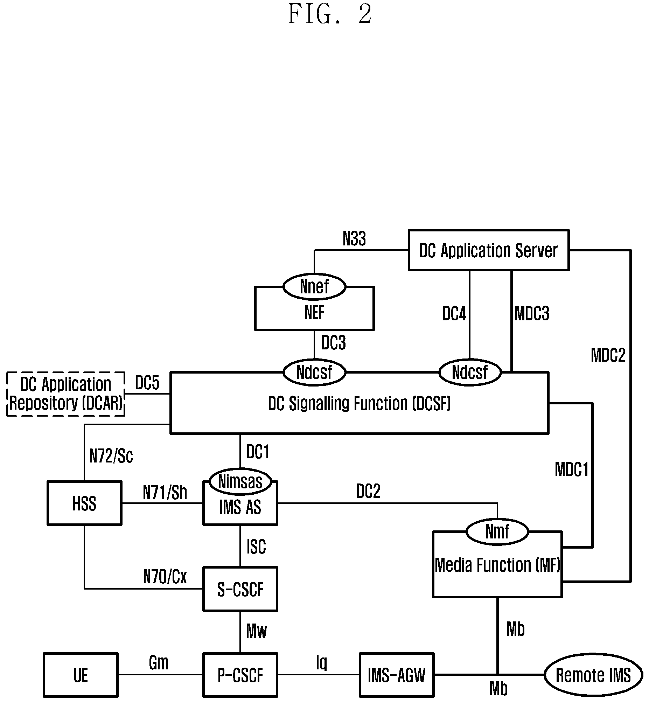

FIG. 2 is an example of an internet protocol (IP) multimedia subsystem data channel (IMS-DC) structure that provides a data channel service based on an internet protocol (IP) multimedia subsystem (IMS) service according to an embodiment of the present disclosure. In the structure, the UE may transmit a session initiation protocol (SIP) INVITE message to the existing call session control function (CSCF) for a call session connection request such as a proxy-CSCF (P-CSCF) and a serving-call session control function (S-CSCF). The SIP INVITE message may include session description protocol (SDP) information, and media-related parameters and multiplexing-related requirement information may be included in the SDP information and transferred to the network. In addition, the UE may insert an SDP offer including bootstrap information and an SDP offer for connecting the existing video or audio session into the SIP INVITE message and transmit the same to use the IMS data channel service.

When the SIP INVITE contains the bootstrap data channel SDP offer for a data channel service connection request, the serving-call session control function (S-CSCF) that has received the SIP INVITE including the SDP information may transfer the SDP offer content related to the corresponding bootstrap to the IMS AS. In this case, the S-CSCF may check whether the UE or the network supports IMS-DC, based on the received SDP offer content related to the bootstrap, and may determine to transfer information for the bootstrap data channel connection for a data channel connection to the IMS AS when both sides support the data channel. The IMS AS receiving the SDP offer message related to the bootstrap from the S-CSCF may first identify whether the corresponding UE or subscriber is able to use the corresponding data channel service from a home subscriber server (HSS). If, based on the user profile of the corresponding user, it is identified that the corresponding user is unable to use the data channel, a multimedia telephony (MMTel) session setup operation may be performed through a general IMS process without any data channel connection. In addition, if the corresponding user is unable to use a data channel-based service, the IMS AS may delete data channel (DC)-related media information within the SIP INVITE message received from the S-CSCF, update the SIP INVITE message, and then transfer the updated SIP INVITE message to the S-CSCF.

When the corresponding service user is able to use the IMS data channel-based service, data channel bootstrapping may be performed through a data channel call request to a data channel signaling function (DCSF). The IMS AS may perform discovery and selection of a DCSF instance from the NRF, based on a local configuration of the network operator or information transferred from the UE, so as to select the DCSF. The IMS AS may transfer a session event control notification (SessionEventControl_Notify) message including information such as SessionEstablishmentRequestEvent, Session ID, CallingID, CalledID, SessionCase, Event initiator, MediaInfoList, and DC Stream ID to the DCSF selected through the process.

The DCSF receiving the DC control request from the IMS AS may determine a policy indicating how to generate a bootstrap data channel, based on related parameters within the DC control request message. In addition, the DCSF may determine MDC1 media information so that the UE may download an application through a media function (MF) or a multimedia resource function (MRF).

Based on the determined information, the DCSF may transfer a MediaControl_MediaInstruction message including information, such as SessionID and MediaInstructionSet, to the IMS AS. The DCSF may insert an MDC1 media endpoint address, a DC stream ID, replacement information of the URL of the application list transmitted through the MDC1 interface, and the like into MediaInstructionSet, and transfer the same to the IMS AS. Based thereon, the DCSF may provide the policy indicating how to generate the bootstrap data channel using the MF in the originating and terminating sides to the IMS AS.

The IMS AS may select the MF through a process of searching for and selecting an MF instance or enhanced MRF that supports a local configuration or DC media function by using the NRF.

The IMS AS may transfer a list of media termination descriptors to the MF selected during the process through a Nmf_MRM_Create message. The IMS AS may make a request for generating two different media terminations. One piece of the media termination information is local bootstrap media-related information, and the other may indicate remote bootstrap media-related information to be provided to a remote UE. Each piece of the media termination information may include resource allocation-required information of the Mb and MDC1 interface. The MF may transfer a negotiation result of the corresponding data channel media resource information to the IMS AS.

The IMS AS may transfer a response to a MediaInstruction request from the DCSF. The corresponding response message may include result information of the operation and negotiation-related information of the MDC1 data channel media resource information. The DCSF may store media resource information in the response message of the MediaInstruction request received from the IMS AS, and transfer a response message related to the data channel connection notification (SessionEventControl_Notify) request to the IMS AS.

The IMS AS may transmit an SIP INVITE message including an updated SDP offer, to which the media information of the MF or enhanced MRF is added, to the S-CSCF. The S-CSCF may transfer the received SIP INVITE message including the updated SDP offer to the remote network and UE #2.

UE#2 and the terminating network may insert an SDP answer related to the bootstrap data channel into a 18X response message and transfer the same to the originating network. According to the received SDP answer message, the MF or enhanced MRF may update data channel media resource information of UE#2. Thereafter, UE#2 and the terminating network may transmit a 200 OK response message meaning that the request has been successfully completed.

The IMS AS may transfer a SessionEventControl Notify message including SessionEstablishmentSuccessEvent, SessionID, and MediaInfoList to the DCSF and notify of successful session connection-event information. Thereafter, the IMS AS receiving the response message of the corresponding successful session connection event notification from the DCSF may transfer a 200 OK message indicating that the bootstrap data channel has been connected to UE#1. Through the same, a bootstrap data channel may be connected between UE#1, UE#2, and the origination MF or enhanced MRF. Thereafter, UE#1 and UE#2 may transfer an application request message to the MF or enhanced MRF to make a request for a data channel application. If a multi-DC application is supported, UE#1 and UE#2 may make a request for the application list to the MF or enhanced MRF. The MF or MRF may change the root URL to application-related URL information, based on URL (replacement URL) information received from the DCSF. Thereafter, the MF may transfer the corresponding application request message received from the UE to the DCSF. The DCSF may provide UE#1 and UE#2 with the application list or appropriate data applications according to data channel processing capability and selection of the UE. When the terminating MF or MRF is used according to the location of the MF, the UE may perform the process through the terminating DCSF and download an appropriate data channel application.

After the connection of the IMS session and the bootstrap data channel and the download of the data channel application to UE#1 and UE#2, UE#1 may transmit an SIP reINVITE message including the updated SDP to the IMS AS. The updated SDP may include not only bootstrap data channel information but also application data channel request information and related DC application binding information.

The IMS AS may determine whether to notify the DCSF of the media change request event, based on user subscription data information. When the IMS AS determines to notify the DCSF of the event, a SessionEventControl_Notify message including MediaChangeRequest Event, Session ID, Event Direction, Event initiator, and Media Info List may be transferred to the DCSF.

After receiving the session event notification message, the DCSF may determine a policy related to the method of performing the application data channel connection request according to the related parameter received through the notification message and a policy of a network operator. When UE#2 is the endpoint and an anchor of the local MF or enhanced MRF is not needed, the DCSF may determine to add the application data channel media descriptor to the SDP offer. If the MF or enhanced MRF is needed as the anchor of the application data channel, the DCSF may transfer a Nimsas_MediaControl message to the IMS AS to indicate the IMS AS to perform allocation of data channel media resources of the MF or enhanced MRF.

The DCSF may transfer a response to the session event notification message to the IMS AS. Thereafter, the IMS AS may transfer the SIP reINVITE message to the originating S-CSCF, and the S-CSCF may transfer the same to the terminating network and UE#2.

UE#2 and the terminating network may insert the 200 OK response into an SDP answer related to the application data channel and transfer the same to the originating network. Thereafter, the IMS AS receiving the SDP offer response message including the 200 OK from the terminating network may notify the DCSF of information related to the successful data channel change. The DCSF may transmit a response to the notification to the IMS AS, and then the IMS AS may transfer the 200 OK response to UE#1 via the S-CSCF and the P-CSCF. At this time, the P-CSCF of the originating network may perform a QoS procedure of the application data channel media, based on SDP answer information including the 200 OK response. UE#1 may transmit ACK to the terminating network. Through the process, an application data channel connection operation between UE#1 and UE#2 may be performed.

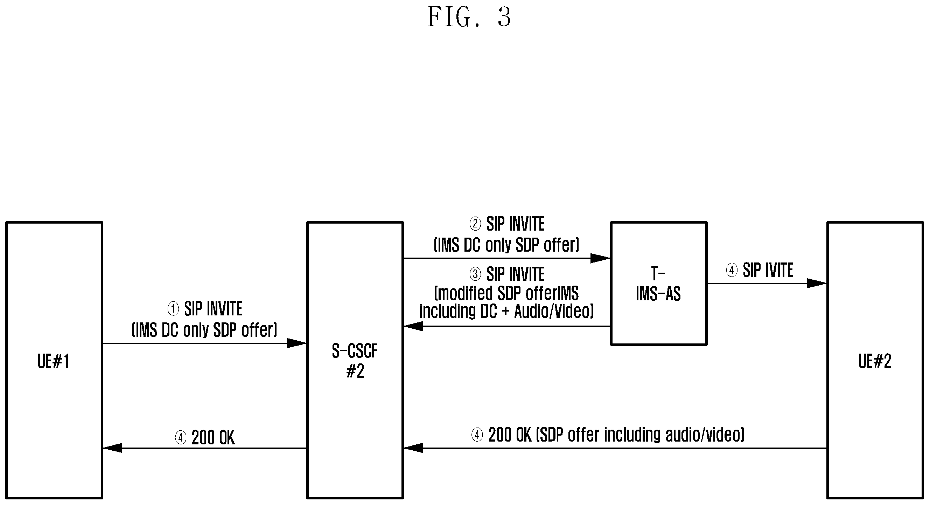

FIG. 3 illustrates an example of a UE and network operation structure depending on an independent IMS data channel service connection request according to an embodiment of the present disclosure.

In an embodiment of the present disclosure, the UE supporting the independent IMS data channel service may determine whether the independent IMS data channel service is supported by the network during registration in the IMS network. When the network supports the independent IMS data channel service, based on information received during registration in the IMS network, the UE may determine whether to make a request for an additional IMS data channel service of the existing IMS session or make a request for a standalone IMS data channel service without the existing IMS session connection when a request for the IMS data channel connection is made.

In an embodiment of the present disclosure, when the UE makes the request for the standalone IMS data channel service connection, the S-CSCF may perform a process of 3^{rd} party registration in a data channel service-dedicated application server (e.g., data channel application server (DAS)) for processing the standalone IMS data channel service. In an embodiment of the present disclosure, when the UE makes the request for the additional IMS data channel service connection of the existing IMS session, the S-CSCF may perform a process of 3^{rd} party registration in a data channel service-dedicated application server (e.g., telephony application server(TAS)) for processing the additional IMS data channel service.

If the UE (UE#1) makes the request for the standalone IMS data channel session connection using the data channel server in the local (originating) network, a session description protocol (SDP) constituting the session connection request message (e.g., SIP INVITE) generated by the UE may include only the information related to the data channel application except for audio, video, and message-related multimedia session parameter information, and the UE may transfer the IMS data session connection request message to the network. The UE may transfer the IMS data channel session connection request message to the network through a bootstrap data channel connection process. The S-CSCF receiving the IMS data channel session connection request message including only the information related to the data channel application may transfer the same to the DAS connected during the process of IMS registration in the UE. The DAS receiving the standalone IMS data channel session connection request may receive IMS data channel-related application information and transfer the data channel application-related information in the session description protocol received from the UE to the DCSF in order to make a request for the application-related information. The DCSF receiving the data channel application-related information from the DAS may determine a policy for generating media resources for transmitting an appropriate data channel application and related information, based on service information requested by the UE (UE#1) and related media information. The DCSF may make a request for allocating media resources in the MF generated based on the policy to the IMS AS (DAS) and, after changing the session description protocol information in the session connection request message, based on the corresponding result, transfer a session request message for the IMS data channel session connection to the network on the remote (terminating) side and the UE (UE#2).

The remote network receiving the session connection request message including the changed session description protocol information from the local network may process the corresponding service connection request by transferring the session connection request message to the related IMS AS (e.g. TAS on the terminating side) to first process the corresponding session connection request message, based on the information on the UE (UE#2) registered in the corresponding network. The IMS AS on the terminating side receiving the session connection request for the standalone IMS data channel connection from the S-CSCF (S-CSCF #2) on the remote network side may perform a service operation for processing the corresponding connection request.

For example, when information on whether UE#2 supports a separate standalone service connection request is registered in the IMS network, the S-CSCF on the terminating side may transfer the session connection request message transmitted from the originating side to the DAS to perform operations for supporting the related service.

However, when the information on whether UE#2 supports the separate IMS DC function is not registered in the network or UE#2 is a UE that supports an additional IMS data channel service during a video, audio, and messaging-based existing IMS session connection, the S-CSCF on the terminating side may transfer the session connection request message transmitted from the originating side to the TAS to perform operations for supporting the related service.

In an embodiment of the present disclosure, the S-CSCF may transfer a relevant session connection request message to the IMS AS to control the service, based on the session connection request message transferred from the network on the originating side and the UE to the network on the terminating side. At this time, when the corresponding UE and network cannot process the standalone IMS data channel connection, based on capability information of the network on the terminating side and/or the UE, the session connection request message may be transferred to the IMS AS to make a request for updating or changing the session description protocol information in the session connection request message.

In an embodiment of the present disclosure, if the session connection request message transferred from UE#1 to the S-CSCF on the terminating side includes only IMS data channel-related session description protocol information, the S-CSCF may transfer the corresponding session connection request message to the IMS AS on the terminating side (T-IMS AS) to make a request for updating the session description protocol information to support the existing IMS session. Through the process, based on UE information registering in the corresponding network, the session connection request message changed based on the session description protocol information for supporting the existing IMS session connection including videos, audios, or messages may be transferred to terminating UE (UE#2) through the S-CSCF on the terminating side. UE#2 receiving the corresponding changed IMS session connection request message may transfer a 200 OK message including a session description protocol response message based on the existing IMS session connection including videos, audios, or messages to the originating network.

In an embodiment of the present disclosure, the IMS AS on the originating side receiving the 200 OK message including the session description protocol response message based on the existing IMS session connection from the terminating network and the UE may transfer the same to the DCSF. If the UE makes a request for information for supporting a standalone IMS service function and additionally the existing video, audio, and messaging-based additional IMS data channel service function during registration in the IMS network, based on capability information of the UE registered in the network on the originating side, the S-CSCF on the originating side may perform an operation of changing an application server connected to the existing DAS to an application server connected to a TAS, based on a response message transmitted by the terminating network and the UE. In an embodiment of the present disclosure, when the TAS supporting the existing video, audio, and messaging-based additional IMS data channel service also supports processing of session description protocol information for the standalone IMS data channel session connection according to a configuration of a network operator, a response message of UE#2 may be processed based on additionally updated session description protocol information without a separate application server connection change.

The DCSF receiving the service connection request response message based on the existing video from UE#2 may configure media resources within the MF on the terminating side as the existing video call-based service and configure media resources within the MF of UE#1, based on the standalone IMS data channel session, so as to complete the configuration for the bootstrap data channel connection to use the related IMS data channel service.

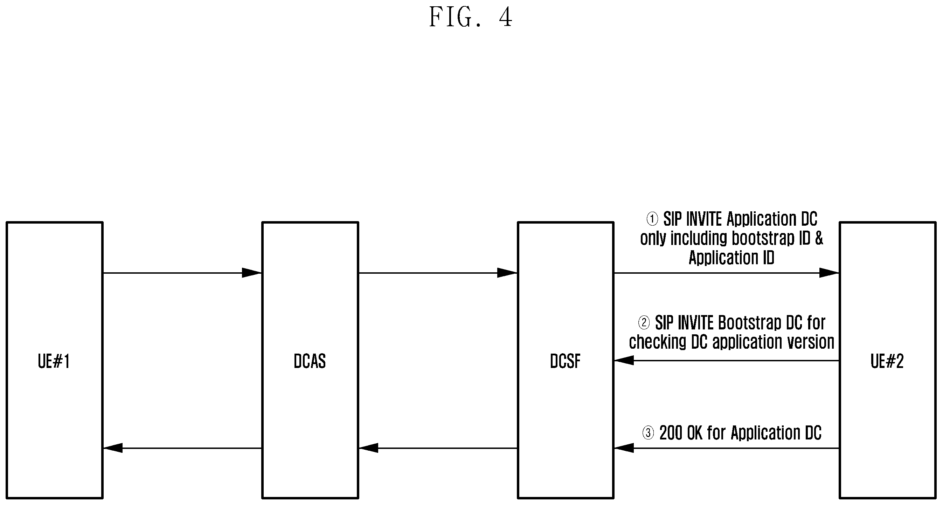

FIG. 4 illustrates an example of a structure for performing a standalone application data channel session connection operation without a separate bootstrap data channel session connection according to an embodiment of the present disclosure.

In an embodiment of the present disclosure, in the case of a native application provided by a network or service operator, a data channel-based service may be provided using an application (e.g. video call) that provides an additional service in a main application (e.g. voice call) without downloading a separate application.

In an embodiment of the present disclosure, without downloading a separate data channel application and data channel application-related configuration information through the bootstrap data channel session connection process, session description protocol (SDP) information including a data channel application ID and data channel application-related configuration information (application binding information, bootstrap ID, DC stream ID, etc.) may be included in the service connection request (SIP INVITE) message when a request for the application data channel connection is made based on preconfigured information.

Based on the session description protocol information requested by the UE, the UE may transfer the session description protocol information for an application data channel session connection request to the S-CSCF and the IMS AS, and the IMS AS may transfer the same to the originating DCSF to perform an operation of determining a data channel policy for the application data channel connection and allocating media resources in the MF. The allocation of media resources from the MF may be completed, and the DCSF may transfer a service connection request message including the session description protocol information updated based on media resource information on the terminating side to the terminating network.

The terminating network (e.g., S-CSCF) receiving the service connection request message including only session description protocol offer information related to the application data channel session without separate session description protocol offer information related to the bootstrap data channel may transfer a related service connection request message to the terminating UE (UE#2).

UE#2 receiving the service connection request message including the data channel application ID and the data channel application-related configuration information (application binding information, bootstrap ID, DC stream ID, etc.) may determine whether a data channel having the corresponding data channel application ID is supported and whether related configuration information is supported by UE#2.

When UE#2 cannot support the related data channel application or configuration information, based on the application data channel-related information, UE#2 may determine to perform a bootstrap data channel connection request operation for making a request for downloading a separate data channel application or configuration information. UE#2 may include one or more pieces of information such as the bootstrap ID, DC stream ID, and application ID received through the service connection request message in the service connection request message that makes a request for the bootstrap data channel connection.

Through the bootstrap data channel connection process, UE#2 may newly download or update the data channel application or the data channel application-related configuration information, based on the data channel application information requested by UE#1. When the corresponding information is inserted into the data channel connection request message received from UE#1, based on the data channel application or data channel application-related configuration information received through the bootstrap data channel connection process, UE#2 may transmit a response message (200 OK) that accepts the corresponding application data channel connection.

If the data channel application or related information updated through the bootstrap data channel connection operation does not satisfy information for supporting the data channel service within the data channel request message received from UE#1, UE#2 may transfer a session connection failure message (e.g., 606 Not Acceptable) including detailed connection failure cause information of the corresponding session connection request to the originating network.

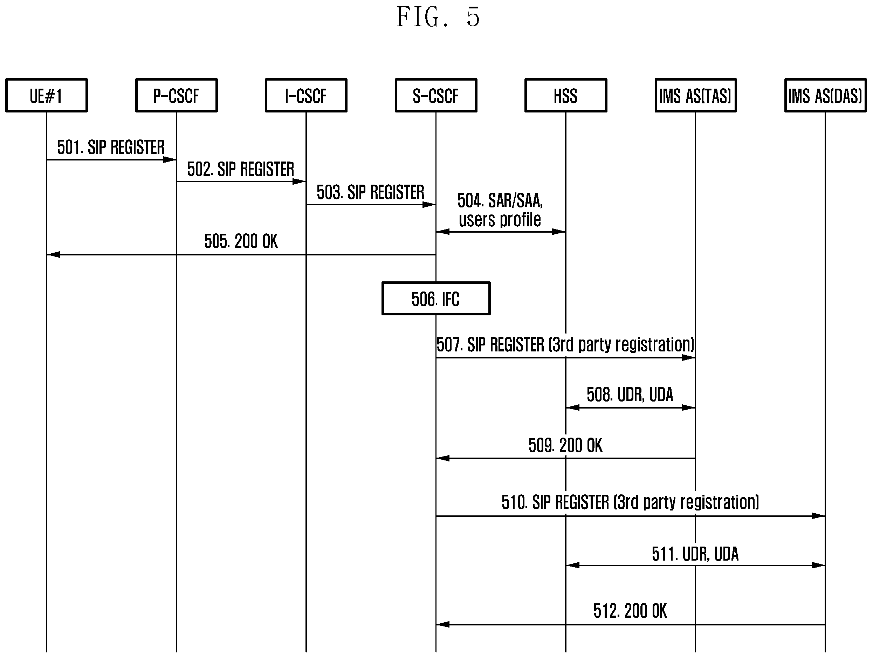

FIG. 5 is a flowchart illustrating an operation related to selection and registration of the IMS AS that supports the service of the UE, based on UE capability information or the like during an IMS registration procedure of the UE according to an embodiment of the present disclosure.

In step 501, the UE may transfer a registration request (SIP REGISTER) message for registration in the IMS network to the P-CSCF. The UE may also transmit a service requested by the corresponding UE or service-related capability information supported by the UE by using a media feature tag within a registration request message header.

In step 502, the P-CSCF may transfer the registration request message requested by the UE to the I-CSCF.

In step 503, the I-CSCF may determine which S-CSCF is able to process the corresponding registration request message, based on HSS data information and then transfer the same to an appropriate S-CSCF.

In steps 504 and 505, the S-CSCF may transmit a 401 response message including nonce information for performing an authentication operation with the UE to the UE through the P-CSCF, and the UE may transfer related information such as shared secret data to the S-CSCF through the registration request message in order to perform the authentication procedure, perform an IMS network registration procedure, and transfer a related result to the UE, so as to complete the registration procedure.

In step 506, the S-CSCF may determine an operation of 3^{rd} party registration in the IMS AS, based on initial filter criteria information within a user profile received from the HSS and service-related information within the registration request message received from the UE and may generate a new registration request message for performing the IMS AS registration procedure, based on IMS AS information supporting each service determined through an initial filter criteria (IFC) operation process. The IFC information may include a priority, a trigger point, and application server-related information.

In steps 507 to 509, the S-CSCF may acquire information on the IMS AS (TAS) related to the service supporting an additional IMS data channel based on the existing IMS session, based on the media feature tag information within the registration request message header of the UE. Thereafter, the corresponding S-CSCF may transfer the request message of registration in the IMS AS for the service supporting the additional IMS data channel service based on the existing IMS session and perform a related authentication procedure with the HSS, thereby completing the procedure of registration in the IMS AS that supports the additional IMS data channel service.

In steps 510 to 512, when the media feature tag information related to the service supporting a standalone IMS data channel (DC) service is included without the existing IMS session within the registration request message header of the UE, the S-CSCF may acquire information on the IMS AS (DAS) that supports the standalone IMS data channel service connection through the initial filter criteria (IFC) operation. Thereafter, the corresponding S-CSCF may transmit the registration request message for registration of a 3^{rd} party in the IMS AS that supports the service supporting the standalone IMS data channel service, and the IMS AS receiving the corresponding registration request message may perform the related authentication procedure with the HSS, so as to complete the procedure of registration in the IMS AS that supports the independent IMS data channel service.

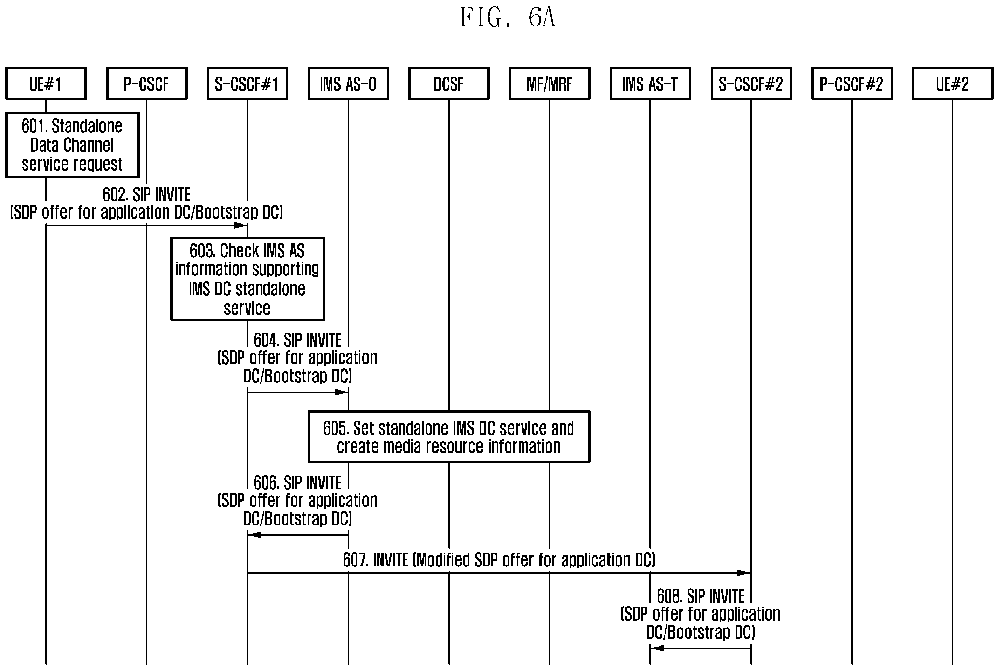

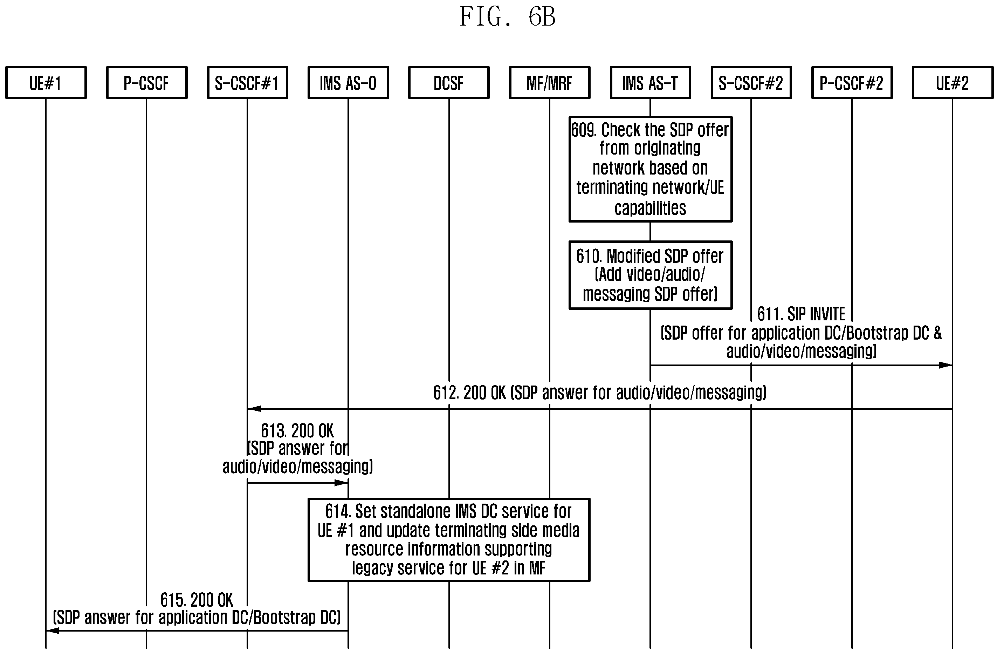

FIG. 6 is a flowchart illustrating an operation process in which, based on a session connection request message including a session description protocol including only data channel-related information, the existing UE and network process the corresponding session connection request message according to an embodiment of the present disclosure. In an embodiment of the present disclosure, it may be assumed that the IMS AS is an IMS application server that processes and supports a video, audio, messaging-related session description protocol, the video, audio, messaging-related session description protocol and an application-related session description protocol for a data channel, or the application-related session description protocol for the data channel. In the case of the video, audio, messaging-related session description protocol and the application-related session description protocol for the data channel, or the application-related session description protocol for the data channel, a separate event-related service subscription procedure between the IMS AS and the DCSF may be needed for the data channel connection.

In step 601, the UE (UE#1) may determine the use of a data channel-only service without a separate video, audio, and messaging-related IMS session connection according to a policy of a service operator or a network operator. Whether the IMS network supports the corresponding data channel-only service may be transferred to the network through a related media feature tag (e.g., "g.3gpp.IMSDC.Standalone") within the message header when a registration request of the UE is made. Based on the corresponding media feature tag information, the network may transfer whether the corresponding service requested by the UE is supported to the UE through a registration request response message. Through the same, the UE may know the type of a network and a service supportable by the UE, based on media feature information available by the UE during network registration.

In step 602, UE#1 may transfer an application or bootstrap data channel session connection request message including a session description protocol including only data channel-related information to the S-CSCF through the P-CSCF.

In step 603, the S-CSCF may perform a service management operation for transferring the corresponding session connection request message to an appropriate IMS AS for processing the session connection request message including only data channel-related information, based on information within the session description protocol transmitted during registration in the IMS network.

In step 604, the S-CSCF may transfer the application or bootstrap data channel session connection request message including the session description protocol including only the data channel-related information to the IMS AS. At this time, the IMS AS receiving the application or bootstrap data channel session connection request message may be an IMS AS that cannot process the existing video, audio, and messaging-related media information but can process session description protocol information including only IMS data channel-related request information.

In step 605, the IMS AS may transfer information for the bootstrap data channel session connection or the application data channel session connection to the DCSF in order to make a request for allocating data channel-related media resources. When information for the bootstrap data channel session connection is transmitted, the data channel session connection request message (SIP INVITE) may be transferred to the IMS AS after a configuration for the bootstrap data channel connection is completed such as allocation of a data channel application list for supporting download of the service-related data channel application requested by the UE and data channel application-related replacement URL information within the MF, and a configuration of a media data channel interface connection for supporting download of the application between the DCSF and the MF. In step 606, the IMS AS may transfer, to the S-CSCF, the SIP INVITE message including the SDP offer constituted by data channel-related information updated based on the information received from the DCSF.

In step 607, the originating S-CSCF (S-CSCF#1) may transfer a data channel session connection request message to the S-CSCF on the terminating side (S-CSCF#2).

In step 608, based on information on the UE stored in the network during registration in the network, when the corresponding UE or the network cannot process the SIP INVITE message constituted only by a data channel-related application session description protocol or when the UE does not support the data channel-related service but supports only the existing voice, video, or messaging-based service, S-CSCF#2 may transfer the SIP INVITE message received from the network on the originating side to the IMS AS on the terminating side (ISM-AS-T).

In step 609, the IMS AS may determine capability of the UE registered in the network or network-supportable service and, when the data channel-only service is not supported, may determine to change SDP offer information in the SIP INVITE message.

In steps 610 and 611, when the corresponding network or UE provides the data channel service in addition to the existing voice, video, or messaging-based IMS service, audio, video, or messaging-related session description protocol information may be added to the SDP offer included in the SIP INVITE message and transferred to the UE on the terminating side (UE#2). However, when the corresponding network or UE supports only the existing voice, video, messaging-based IMS service, the data-related session description protocol information in the SIP INVITE message may be inactivated (INACTIVE) and the audio, video, or messaging-related session description protocol information may be added and transferred to the UE on the terminating side (UE#2).

In step 612, UE#2 may transfer a 200 OK response message including only the audio, video, or messaging-related session description protocol information when only the existing voice, video, or messaging-based IMS service is supported, and may transfer a response message including the audio, video, or messaging-related session description protocol and data channel-related session description protocol information to S-CSCF#1 when the data channel service is supported in addition to the voice, video, or messaging-based service.

In step 613, if the IMS AS can process the related service, based on the audio-video, or messaging-related session description protocol information, S-CSCF#1 may transfer response information received from the UE#2 side to the IMS AS. However, it may be determined that IMS AS (e.g., DAS of FIG. 3) capable of processing only the data channel service, based on the data channel-related session description protocol information is changed to the IMS AS (e.g., TAS of FIG. 3) capable of processing the audio, video, message, and data channel-related session description protocol information, based on information on IMS ASs acquired during UE registration.

Thereafter, S-CSCF#1 may determine to change the IMS AS from the DAS to the TAS and transfer the 200 OK response message received from UE#2 to the changed IMS AS (TAS), so as to complete the data channel session connection operation. At this time, within the information transferred to the TAS, at least one piece of the data channel session information such as the session ID, calling ID, called ID, and DC stream ID generated during the connection in step 605 according to the request from UE#1 may also be transmitted. The data channel session information may be received from the DAS or received through information within the data channel-related SDP answer received by UE#2.

In step 614, the IMS AS may transfer the received UE#2-related information to the DCSF to complete media resource allocation of the MF on the terminating side. Thereafter, the DCSF may inform the IMS AS of the successful completion of configurations for supporting the data channel-related service.

In step 615, based on the information received from the DCSF, the IMS AS may transfer the 200 OK response message changed based on the information on the MF on the originating side to UE#1 and inform that the data channel connection request operation requested by UE#1 has been successfully performed.

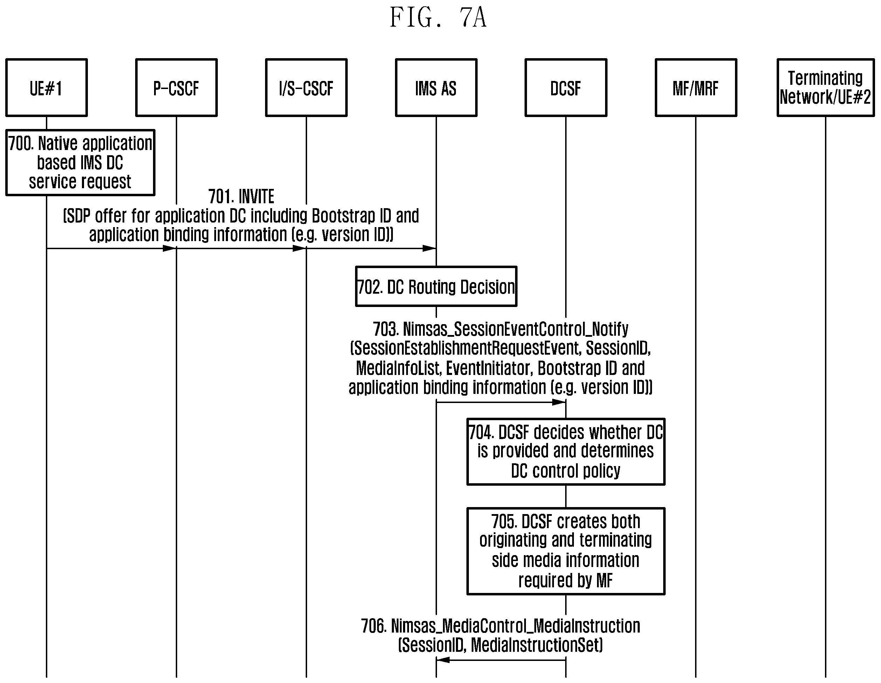

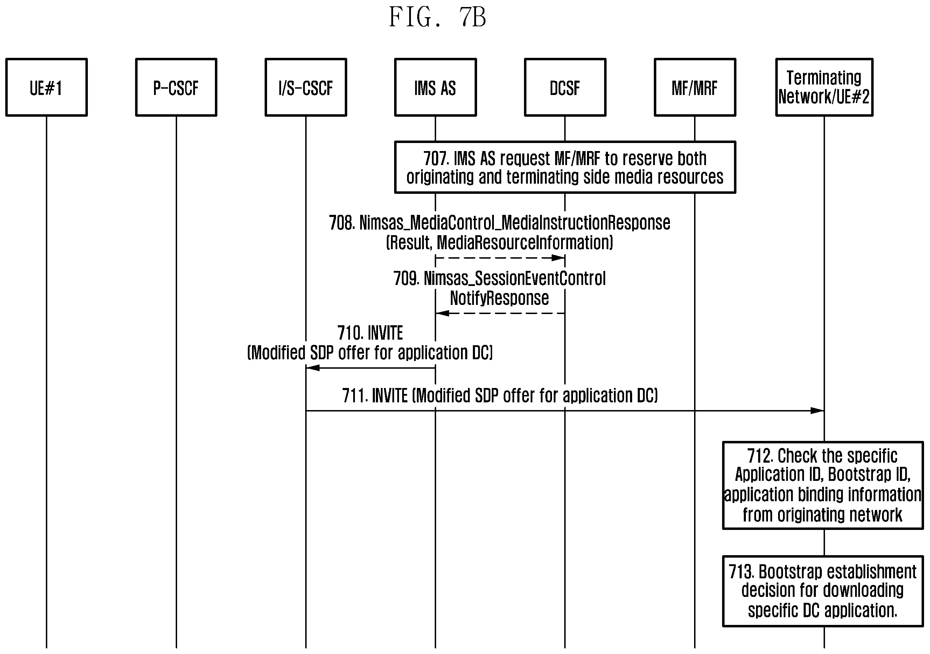

FIG. 7 is a flowchart illustrating an operation of performing an application data channel-only session connection request without a separate bootstrap data channel connection according to an embodiment of the present disclosure.

In step 700, UE#1 may determine the data channel service connection request using a native data channel application.

In step 701, UE#1 may transfer the application data channel-only session connection request to the IMS AS through the SIP INVITE message, based on the SDP offer including application-related information such as an application ID and bootstrap ID related to the native application, or application binding information.

In step 702, the IMS AS may determine the location of an appropriate DCSF (e.g., local DCSF or remote DCSF) through the bootstrap ID or the like.

In step 703, the IMS AS may transfer a Nimsas_SessionEventControl_Notify message including information such as SessionEstablishmentRequestEvent, SessionID, MediaInfoList, EventInitiator, Application ID, Bootstrap ID, and application binding information (e.g. version ID) to the DCSF to make a request for performing a data channel session connection request event.

In steps 704 and 705, the DCSF may determine a data channel policy, based on the information received from the UE, and generate media resource information on originating and terminating sides within the MF.

In step 706, the DCSF may generate a media instruction set, based on media resource allocation information within the MF, and then transfer the same to the IMS AS to perform a related media resource handling request. After receiving information on an appropriate MF supporting the corresponding media instructions through the NRF, based on the media instruction information received from the DCSF, the IMS AS may determine transmission of the media instruction set information to the selected MF.

In step 707, after selecting the appropriate MF supporting the media information received from the DCSF, the IMS AS may transfer related media instruction set information to the MF and allocate media resources on originating and terminating sides for supporting the data channel service. Thereafter, the MF may transfer the corresponding media resource allocation result to the IMS AS, in which case relevant information for supporting an additional interface connected to the MF, such as MDC1 and MDC2, may be additionally transmitted.

In step 708, the IMS AS may transfer MF-related media resource allocation information and media resource allocation result information received from the MF to the DCSF.

In step 709, the DCSF may transfer the result of the data channel session connection request event requested by the IMS AS in step 703 to the IMS AS.

In step 710 and step 711, the IMS AS may transfer the SIP INVITE message including the SDP offer changed based on the media resource information on the terminating side within the MF to the terminating network and the UE.

In step 712, UE#2 determines whether to accept the related data channel session connection request, based on information in the SIP INVITE message transmitted from the originating network. Specifically, based on application-related information such as the application ID and bootstrap ID related to the native application, and the application binding information transmitted from UE#1, UE#2 may determine whether UE#2 supports the corresponding native application.

In step 713, when the corresponding native application is not supported or configuration information such as the version does not match based on the application-related information such as the application ID and bootstrap ID related to the native application, and the application binding information received from UE#1, UE#2 may download a new data channel application through the bootstrap data channel connection or determine an update operation of the application-related configuration information.

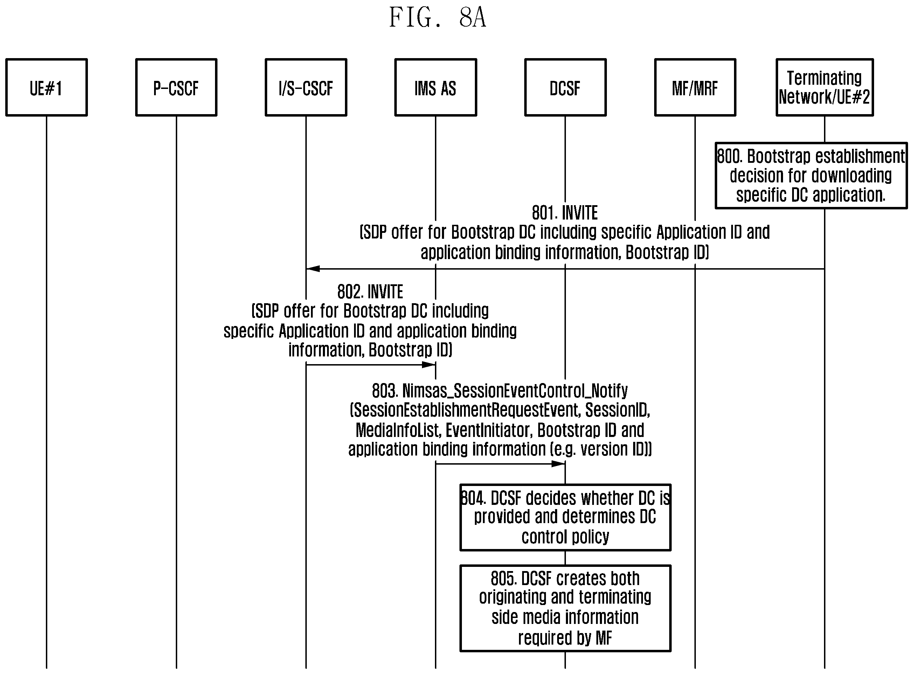

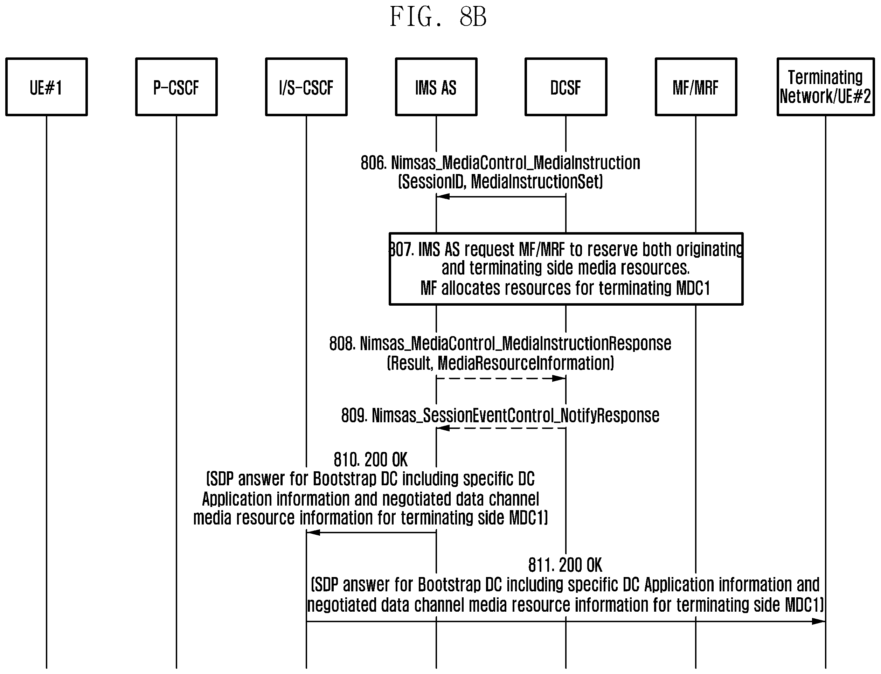

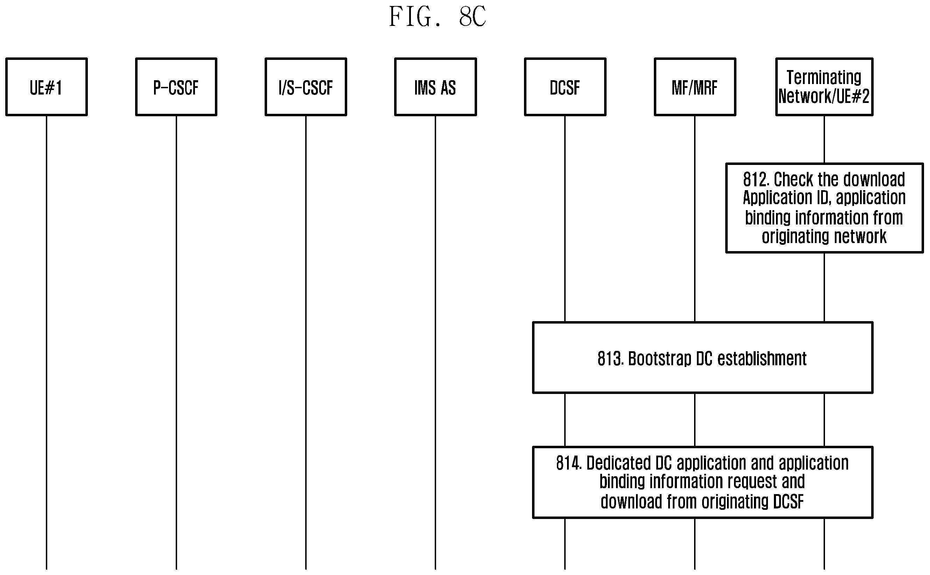

FIG. 8 is a flowchart illustrating an operation of the UE on the terminating side for performing an application data channel-only session connection request without a separate bootstrap data channel connection according to an embodiment of the present disclosure. In step 800, when the corresponding native application is not supported or configuration information including the version or the like is not correct based on the application-related information such as the application ID and bootstrap ID related to the native application, and the application binding information received from UE#1, UE#2 may determine a new data channel application download operation through the bootstrap data channel connection or an application-related configuration information update operation.

In step 801, based on the SDP offer including the application ID, bootstrap ID, and application binding information received from UE#1, UE#2 may transfer the SIP INVITE message for the bootstrap data channel session connection to the S-CSCF on the originating side.

In step 802, the S-CSCF receiving the bootstrap data channel session connection request message from UE#2 may transfer the same to the IMS AS.

In step 803, the IMS AS may make a request for performing the session connection request event to the DCSF in order to transmit data channel application download or application-related configuration information together with UE#2. At this time, the bootstrap data channel connection between UE#2 and the DCSF and MF may be a channel connection requested using a separate session ID in order to terminate the bootstrap data channel connection after the related data channel application download or application-related configuration update.

In steps 804 and 805, the DCSF may determine a data channel policy, based on the application-related information received from UE#2, and generate media resource information on the terminating side within the MF.

In step 806, the DCSF may generate a media instruction set, based on media resource allocation information within the MF, and then transfer the same to the IMS AS to perform a related media resource handling request. After receiving information on an appropriate MF supporting the corresponding media instructions through the NRF, based on the media instruction information received from the DCSF, the IMS AS may determine transmission of the media instruction set information to the selected MF. The media instruction information may include replacement URL information or the like related to the native application.

In step 807, after selecting the appropriate MF supporting the media information received from the DCSF, the IMS AS may transfer related media instruction set information to the MF and allocate media resources on the terminating side for supporting the data channel service. Thereafter, the MF may transfer the corresponding media resource allocation result to the IMS AS, in which case relevant media resource information for supporting a MDC1 interface between the MF and the DCSF may be additionally transmitted.

In step 808, the IMS AS may transfer MF-related media resource allocation information and media resource allocation result information received from the MF to the DCSF.

In step 809, the DCSF may transfer the result of the bootstrap data channel session connection request event requested by the IMS AS in step 803 to the IMS AS.

In step 810 and step 811, the IMS AS may transfer the media resource information on the terminating side within the MF and the SDP answer including the native application or a native application list to the terminating network and the UE.

In step 812, UE#2 may check whether information on the received native data channel application is the same as the information received from UE#1, based on the received native data channel application or native data channel application list.

In step 813 and step 814, when the data channel session connection request response message (SDP answer) received in step 810 and step 811 does not include the native application or the native application list, UE#2 may make a request for the native application or the native application list to the DCSF through the MF after the bootstrap data channel session connection.

If the data channel session connection request response message (SDP answer) received in step 810 and step 811 does not include the native application or the native application list, step 812 of comparing the application information received from UE#1 with the native application information received from the DCSF by UE#2 may be performed after step 814.

If UE#2 supports the application received from UE#1, based on the data channel application list received from the originating DCSF in step 812, the bootstrap data channel connection operation between UE#2 and the DCSF may be performed. Thereafter, UE#2 may perform an operation of downloading a specific data channel application and application-related information from the DCSF through the MF, based on the selected application information. After performing the operation of downloading the native data channel application and the application-related information, UE#2 may transfer an SIP reINVITE message to the DCSF in order to release the bootstrap data channel session connection according to configurations of the network operator or service operator, and the DCSF receiving the request information may perform an operation of deleting data channel-related resource allocation information within the MF and terminating the data channel session.

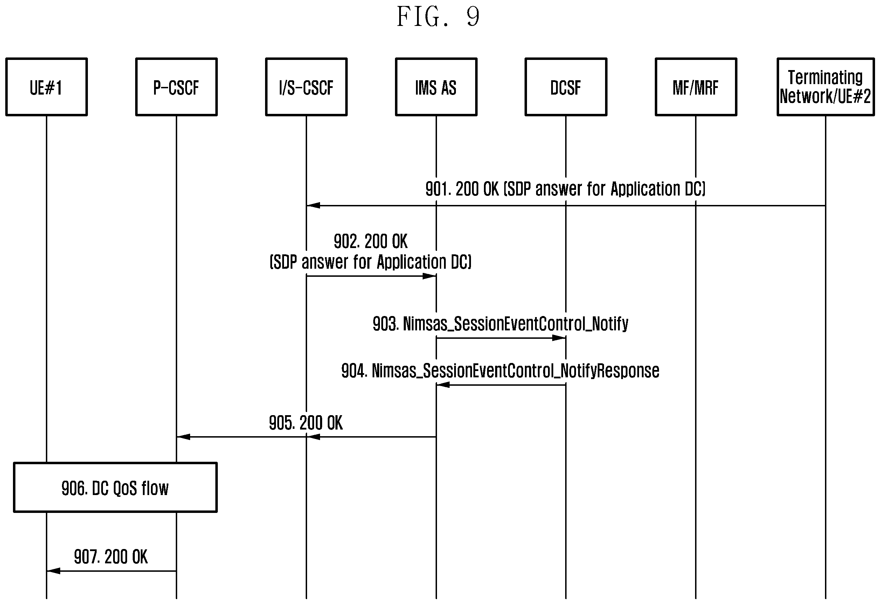

FIG. 9 is a flowchart illustrating an operation based on the case where a required data channel application and related information may be supported in connection with a process of performing an application data channel-only session connection request without a separate bootstrap data channel connection according to an embodiment of the present disclosure.

In step 901, when UE#2 may support the data channel application and application-related information required by UE#1 through step 712 of FIG. 7 or when the data channel application and application-related information required by UE#1 are downloaded through the separate bootstrap data channel session connection process of FIG. 8, UE#2 may transfer a response message (200 OK) including an SDP answer indicating acceptance of the corresponding application data channel connection request to the S-CSCF on the originating side. The response message may include media resource information of UE#2 related to media resources on the terminating side within the MF.

In step 902, the S-CSCF may transfer the response message of the application data channel connection request received from UE#2 to the IMS AS.

In step 903, the IMS AS may transfer message indicating that the application data channel configuration has been completed to the DCSF, based on the SDP answer received from UE#2.

In step 904, the DCSF may transfer message indicating that the application data channel connection has been finally completed to the IMS AS through the 200 OK message.

In step 905, the IMS AS may transfer 200 OK message indicating that the application data channel session connection has been completed to the P-CSCF via the S-CSCF.

In step 906, the P-CSCF may perform a QoS resource allocation operation, based on the application data channel session-related information included in the 200 OK message.

In step 907, when the QoS resource allocation operation is completed, the P-CSCF may transfer information indicating that the application data channel session connection using a native data channel application has been finally completed to UE#1 through the 200 OK message.

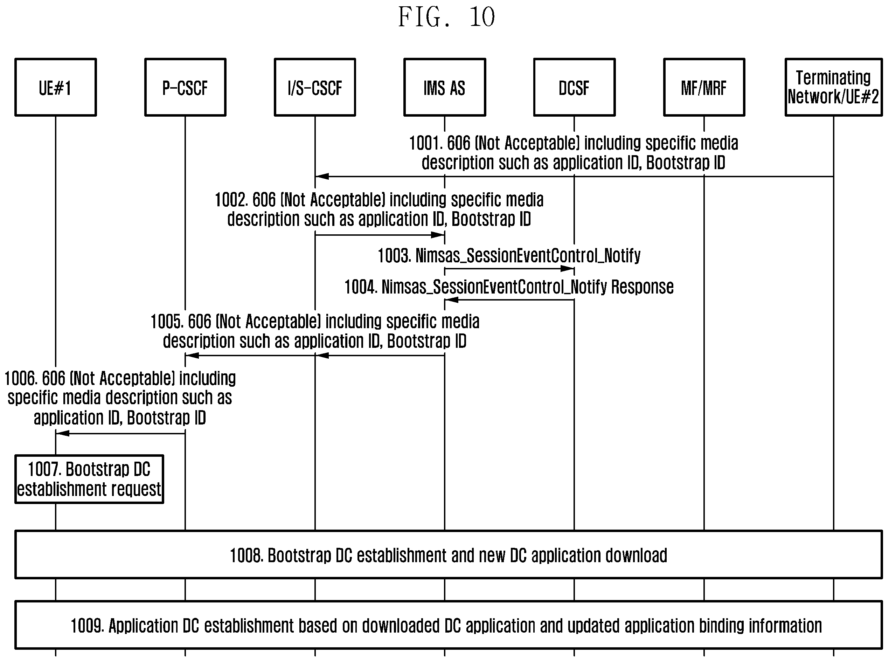

FIG. 10 is a flowchart illustrating an operation based on the case where a required data channel application and related information may not be supported in connection with a process of performing an application data channel-only session connection request without a separate bootstrap data channel connection according to an embodiment of the present disclosure.

In step 1001, when UE#2 may not support the data channel application and application-related information required by UE#1 through step 712 of FIG. 7 or when the data channel application and application-related information required by UE#1 may not be downloaded through the separate bootstrap data channel session connection process of FIG. 8, UE#2 may transfer a message (606 Not Acceptable) that rejects the application data channel connection request based on the data channel application transmitted by UE#1 to the network on the originating side (S-CSCF).

In step 1002, the S-CSCF may transfer the 606 message received from UE#2 to the IMS AS.

In step 1003, the IMS AS may transfer SessionEstablishmentFailureEvent information for notifying of failure of the application data channel session connection and making a request for deleting the related data channel policy and media resources within the MF to the DCSF through a Nimsas_SessionEventControl_Notify message.

In step 1004, the DCSF may transfer the application data channel-related media deletion result to the IMS AS through Nimsas_SessionEventControl_Notify Response.

In step 1005 and step 1006, the IMS AS may transfer information on the result of application data channel session connection failure to UE#1 by using a 606 message.

In step 1007, UE#1 may determine to perform a bootstrap data channel session connection request operation for downloading an appropriate data channel application to be used by UE#1 and UE#2 for the data channel service and application-related configuration information.

In step 1008 and step 1009, UE#1 may transfer appropriate data channel application information to be used by UE#1 and UE#2 for the data channel service through the bootstrap data channel session connection operation, and each UE may download the appropriate data channel application and application-related configuration information in consideration of UE capability.

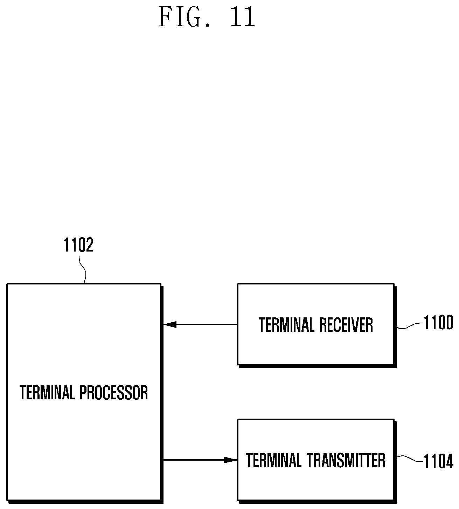

FIG. 11 is a block diagram illustrating the structure of a terminal according to an embodiment of the present disclosure.

Referring to FIG. 11, the terminal according to an embodiment of the present disclosure may include a terminal receiver 1100, a terminal transmitter 1104, and a terminal processor 1102. The terminal receiver 1100 and the terminal transmitter 1104 may be collectively referred to as a transceiver in the present disclosure. The transceiver may transmit and receive a signal to and from a base station. The signal may include control information and data. To this end, the transceiver may include an RF transmitter that up-converts and amplifies the frequency of a transmitted signal, an RF receiver that low-noise amplifies a received signal and down-converts the frequency, and the like. Further, the transceiver may receive a signal through a wireless channel, output the signal to the terminal processor 1102, and transmit the signal output from the terminal processor 1102 through the wireless channel. The terminal processor 1102 may control a series of processes so that the terminal can operate according to the embodiments.

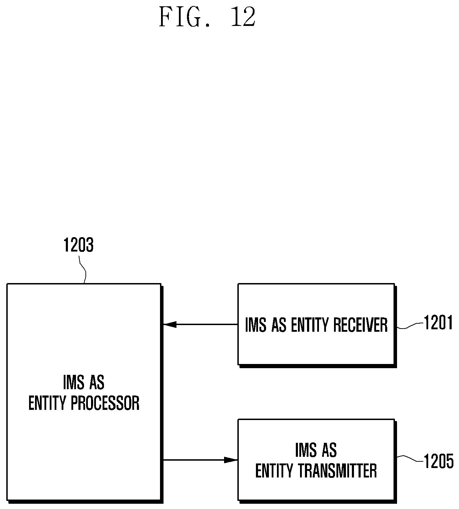

FIG. 12 is a block diagram illustrating the structure of an IMS AS entity according to an embodiment of the present disclosure.

Referring to FIG. 12, the IMS AS entity according to an embodiment of the present disclosure may include at least one of an IMS AS entity receiver 1201, an IMS AS entity transmitter 1205, and an IMS AS entity processor 1203. The IMS AS entity receiver 1201 and the IMS AS entity transmitter 1205 may be collectively referred to as a transceiver in the present disclosure. The transceiver may transmit and receive a signal to and from the terminal. The signal may include control information and data. To this end, the transceiver may be constituted by an SIP server for generating or changing a new SIP message, based on additional information for supporting a service based on a transmitted/received SIP message, or the like. Further, the transceiver may receive a signal through a wired/wireless channel, output the same to the IMS AS entity processor 1203, and transmit the signal output from the IMS AS entity processor 1203 through the wired/wireless channel. The IMS AS entity processor 1203 may control a series of processes so that the IMS AS entity can operate according to the embodiment of the present disclosure.

Meanwhile, the order of description in the drawing illustrating the method proposed in the present disclosure does not necessarily correspond to the order of execution, and the predecessor relationship may be changed or executed in parallel. Alternatively, some components may be omitted and only some components may be included in the drawing illustrating the method proposed in the present disclosure within a range that does not impair the substance of the present disclosure.

Methods pertaining to claims or embodiments of the present disclosure may be implemented in the form of hardware, software, or a combination of hardware and software.

When the methods are implemented in software, a computer-readable storage medium for storing one or more programs (software modules) may be provided. The one or more programs stored in the computer-readable storage medium may be configured for execution by one or more processors within the electronic device. The one or more programs may include instructions for allowing the electronic device to perform methods according to embodiments stated in the claims or specifications of the present disclosure. The programs (software modules or software) may be stored in non-volatile memory including random access memory and flash memory, read only memory (ROM), electrically erasable programmable read only memory (EEPROM), a magnetic disc storage device, a compact disc-ROM (CD-ROM), digital versatile discs (DVDs), or other types of optical storage devices, or a magnetic cassette. Alternatively, the programs may be stored in a memory including any combination of some or all thereof. Further, a plurality of configuration memories may be included.

In addition, the programs may be stored in an attachable storage device accessible through communication networks such as the Internet, Intranet, local area network (LAN), wide LAN (WLAN), and storage area network (SAN) or a combination thereof. The storage device may access the device that implements embodiments of the present disclosure through an external port. Further, a separate storage device in the communication network may access the device that implements the embodiments of the present disclosure. In the above-described detailed embodiments of the present disclosure, components included in the present disclosure are expressed in a singular or plural form according to a presented detailed embodiment. However, the singular or plural expression is selected to be suitable for context for convenience of description, and the present disclosure is not limited to a singular component or plural components. Even components expressed in the plural form may be configured as a singular, and even a component expressed in the singular form may be configured as a plural.

Meanwhile, although detailed embodiments have been described in the detailed description of the present disclosure, various modifications can be made without departing from the scope of the present disclosure. Therefore, the scope of the present disclosure should not be defined as being limited to the described embodiments, but should be defined by the appended claims described below and equivalents thereof.

## Claims

1. A method performed by a second terminal in a wireless communication system, the method comprising:
acquiring a session description protocol (SDP) offer for a bootstrap data channel related to a first terminal and an SDP offer for an application data channel, the SDP offers comprising application binding information related to a data channel application;
identifying whether the data channel application is available within the second terminal, based on the application binding information;
when the data channel application is not available within the second terminal, establishing a connection of a bootstrap data channel session between the second terminal and a media function (MF); and
downloading the data channel application, based on the connection of the bootstrap data channel session.

2. The method of claim 1, wherein the application binding information corresponds to an application identifier (ID).

3. The method of claim 1, further comprising:
transmitting an application request message for downloading the data channel application or a data channel application list to the MF by the second terminal; and
downloading the data channel application, based on the application request message.

4. The method of claim 1, wherein the SDP offer for the bootstrap data channel and the SDP offer for the application data channel are included in a service connection request message for a standalone internet protocol (IP) multimedia service (IMS) data channel session.

5. The method of claim 1, further comprising, when the data channel application is available within the second terminal or the second terminal downloads the data channel application, transmitting a 200 OK response message to the first terminal.

6. The method of claim 1, wherein the downloading of the data channel application further comprises:
when the data channel application is not available, downloading the data channel application through a bootstrap data channel connection; or
when configuration information of the data channel application is different, updating the configuration information related to the data channel application through the bootstrap data channel connection.

7. A method performed by a first terminal in a wireless communication system, the method comprising:
transmitting a session description protocol (SDP) offer for a bootstrap data channel related to the first terminal and an SDP offer for an application data channel to an internet protocol (IP) multimedia service (IMS) application server (AS), the SDP offers comprising application binding information related to a data channel application; and
receiving a 200 OK response message from a second terminal,
wherein the application binding information is used to identify whether the data channel application is available within the second terminal by the second terminal.

8. The method of claim 7, wherein the receiving the 200 OK response message from the second terminal comprises:
in case that the data channel application is available within the second terminal or when the second terminal downloads the data channel application, receiving the 200 OK response message from the second terminal,
wherein binding information related to the data channel application corresponds to an application identifier (ID), and
wherein the SDP offer for the bootstrap data channel and the SDP offer for the application data channel are included in a service connection request message for a standalone internet protocol (IP) multimedia service (IMS) data channel session.

9. A second terminal in a wireless communication system, the second terminal comprising:
a transceiver; and
a processor,
wherein the processor is configured to:
acquire a session description protocol (SDP) offer for a bootstrap data channel related to a first terminal and an SDP offer for an application data channel, the SDP offers comprising application binding information related to a data channel application; identify whether the data channel application is available within the second terminal, based on the application binding information;
when the data channel application is not available within the second terminal, establish a connection of a bootstrap data channel session between the second terminal and a media function (MF); and
download the data channel application, based on the connection of the bootstrap data channel session.

10. The second terminal of claim 9, wherein the application binding information corresponds to an application identifier (ID).

11. The second terminal of claim 9, wherein the processor is further configured to transmit an application request message for downloading the data channel application or a data channel application list to the MF, and download the data channel application, based on the application request message.

12. The second terminal of claim 9, wherein the SDP offer for the bootstrap data channel and the SDP offer for the application data channel are included in a service connection request message for a standalone internet protocol (IP) multimedia service (IMS) data channel session.

13. The second terminal of claim 9, wherein, when the data channel application is available within the second terminal or the second terminal downloads the data channel application, the processor is further configured to transmit a 200 OK response message to the first terminal.

14. The second terminal of claim 9, wherein, when the data channel application is downloaded, the processor is further configured to:
when the data channel application is not available, download the data channel application through a bootstrap data channel connection; or
when configuration information of the data channel application is different, update the configuration information related to the data channel application through the bootstrap data channel connection.

15. A first terminal in a wireless communication system, the first terminal comprising:
a transceiver; and
a processor,
wherein the processor is configured to:
transmit a session description protocol (SDP) offer for a bootstrap data channel related to the first terminal and an SDP offer for an application data channel to an internet protocol (IP) multimedia service (IMS) application server (AS), the SDP offers comprising application binding information related to a data channel application; and receive a 200 OK response message from a second terminal,
wherein the application binding information is used to identify whether the data channel application is available within the second terminal by the second terminal.
